# EUROPEAN PATENT APPLICATION

(11) **EP 2 943 004 A1**
(43) Date of publication of application: **11.11.2015**
(21) Application number: 14305683.6
(22) Date of filing: 09.05.2014
(51) Int. Cl.: H04W 24/04, H04B 17/00

(54) **Multi-band testing method and apparatus**

(71) Applicant: ALCATEL LUCENT, 92100 Boulogne-Billancourt (FR)
(72) Inventor: Bitzer, Thomas, 70435 Stuttgart (DE); NG, Man Hung, SWINDON, WI SN5 7DJ (GB)
(74) Representative: Huber, Meik

(57) **Abstract**

The present invention relates to a method and apparatus for multi-band testing. A first signal in a lower frequency band of the maximum radio bandwidth of the multi-band transmitter is used. The first signal has a carrier located at the lower edge of the lower frequency band. Further, a second signal in a higher frequency band of the maximum radio bandwidth of the multi-band transmitter is used. The second signal has a carrier located at the higher edge of the higher frequency band. Further, a third signal in a middle frequency band of the maximum radio bandwidth of the multi-band transmitter is used. The middle frequency band is located asymmetrically between the lower frequency band and higher frequency band. The transmitter test is performed with the first, second and third signal.

## Description

### FIELD OF INVENTION

The present invention relates to a method and apparatus for multi-band testing.

### BACKGROUND OF THE INVENTION

This section introduces aspects that may be helpful in facilitating a better understanding of the invention. Accordingly, the statements of this section are to be read in this light and are not to be understood as admission about what is in the prior art.

3GPP has been working to define in TS 36.141 frequency requirements for test configurations to be used for testing of multi-band radio base station radio. This is to ensure that different devices of different manufacturers satisfy the same interface specifications. Purpose of the testing is to discover if a device satisfies all predefined requirements under predefined conditions.

For testing, each concerned band within the maximum radio bandwidth of a base station is considered as an independent band and corresponding test configurations are applied to each band independently. Therefore, for each band of the multi-band radio base station, the same test configuration is applied and the corresponding signals are generated for testing.

3GPP has defined multi-band test configurations in TS 36.141. In chapter 4.10.4 and 4.10.5, multi-band test configuration for full carrier allocation (ETC4) and multi-band test configuration with high PSD per carrier (ETC5) are defined, respectively.

### SUMMARY OF THE INVENTION

It is an object of the invention to improve the above test configurations in order to provide a more demanding base station test.

According to one embodiment, a method for testing a multi-band transmitter is proposed. A first signal in a lower frequency band of the maximum radio bandwidth of the multi-band transmitter is received. The first signal has a carrier located at the lower edge of the lower frequency band. Further, a second signal in a higher frequency band of the maximum radio bandwidth of the multi-band transmitter is received. The second signal has a carrier located at the higher edge of the higher frequency band. Further, a third signal in a middle frequency band of the maximum radio bandwidth of the multi-band transmitter is received. The middle frequency band is located asymmetrically between the lower frequency band and higher frequency band. The third signal has a carrier located at an edge of the middle frequency band. A multi-band transmitter test is performed using the received first signal, the received second signal and the received third signal. Thus, the signals used for the transmitter test are distributed within the maximum radio bandwidth such that at least a narrower gap between two adjacent frequency bands used for testing and a wider gap between two adjacent frequency bands used for testing is provided. This is due to the asymmetric location of the middle frequency band. A multi-band transmitter test using signals with different frequency gaps between the tested frequency bands is advantageous as it is more demanding and more meaningful compared to transmitter tests having the same frequency gaps between the tested frequency bands. Inter-modulation products of transmitted carriers fall into the out-of-block frequency ranges, which also enhances the test configuration. In one embodiment, a carrier of the middle frequency band and a carrier of an outer frequency band are located such that the narrowest possible gap between the two carriers is obtained.

In one embodiment, the third signal has a carrier located at the higher edge of the middle band. In one embodiment, the third signal has a carrier located at the lower edge of the middle band. Positioning a carrier of the middle frequency band at the edge of the middle frequency band provides a high quality multi-band test scenario.

In one embodiment, the transmitter is a transmitter of a multi-band base station.

In one embodiment, the first, second and third received signals each consisting of two or more carriers having defined frequency distances from each other within the frequency bands. This ensures a demanding multi-band test using multiple carriers per band.

In one embodiment, the performed transmitter test is at least one of a base station output power test, transmitter ON/OFF power test, error vector magnitude test, time alignment error test, adjacent channel leakage power ratio test, cumulative adjacent channel leakage power ratio requirement in non-contiguous spectrum test, operating band unwanted emissions test and transmitter spurious emissions test.

In one embodiment, the transmitter under test is part of a base station comprising at least one transmitter and at least one receiver. The transmitter generates the first signal, the second signal and the third signal. The transmitter port of the base station is terminated and spurious emissions of the first, second and third signal are emitted by the receiver port. These spurious emissions are measured for the transmitter test.

In one embodiment, a method for testing a multi-band receiver is proposed. A first signal in a lower frequency band of the maximum radio bandwidth of the multi-band receiver is received. The first signal has a carrier located at the lower edge of the lower frequency band. The first signal is overlaid by an interfering signal, e.g. by a coupler, circulator or hybrid. A second signal in a higher frequency band of the maximum radio bandwidth of the multi-band receiver is received. The second signal has a carrier located at the higher edge of the higher frequency band. The second signal is overlaid by an interfering signal, e.g. by a coupler, circulator or hybrid. A third signal in a middle frequency band of the maximum radio bandwidth of the multi-band receiver is received. The middle frequency band is located asymmetrically between the lower frequency band and the higher frequency band. The third signal has a carrier located at an edge of the middle frequency band. The third signal being overlaid by an interfering signal, e.g. by a coupler, circulator or hybrid. A multi-band receiver test is performed using the received first, second and third signal. In one embodiment, the proposed multi-band receiver test is one of an adjacent channel selectivity and narrowband blocking test, a blocking characteristics test and a receiver intermodulation test. Thus, the signals used for the receiver test are distributed within the maximum radio bandwidth such that at least a narrower gap between two adjacent frequency bands used for testing and a wider gap between two adjacent frequency bands used for testing is provided. This is due to the asymmetric location of the middle frequency band. A multi-band receiver test using signals with different frequency gaps between the tested frequency bands is advantageous as it is more demanding and more meaningful compared to receiver tests having the same frequency gaps between the tested frequency bands. Inter-modulation products of received carriers fall into the out-of-block frequency ranges, which also enhances the test configuration. In one embodiment, a carrier of the middle frequency band and a carrier of an outer frequency band are located such that the narrowest possible gap between the two carriers is obtained.

In one embodiment, the interfering signal which is overlaid to the first, second and third signal is composed of a combination of a continuous wave (CW) interfering signal and a modulated interfering signal. In one embodiment, the performed receiver test is a receiver intermodulation test.

According to one embodiment, an apparatus for generating a receiver testing signal is proposed. The apparatus comprises a first signal generator for generating a first signal in a lower frequency band of the maximum radio bandwidth of the multi-band receiver. The first signal has a carrier located at the lower edge of the lower frequency band. The first signal generator is further for generating a second signal in a higher frequency band of the maximum radio bandwidth of the multi-band receiver. The second signal has a carrier located at the higher edge of the higher frequency band. The apparatus is further for generating a third signal in a middle frequency band of the maximum radio bandwidth of the multi-band receiver. The middle frequency band is located asymmetrically between the lower frequency band and the higher frequency band. The third signal has a carrier located at an edge of the middle frequency band. Further, the apparatus comprises a second signal generator for generating an interfering signal. A first coupler for coupling the signals of the first signal generator and the second signal generator is provided.

According to one embodiment, the second signal generator for generating an interfering signal comprises a third signal generator for generating a continuous wave (CW) interfering signal and a fourth signal generator for generating a modulated interfering signal. Further, a second coupler for coupling the signals of the third signal generator and the fourth signal generator is provided.

According to one embodiment, a system for performing a multi-band transmitter test is proposed. The system at least comprises a transmitter. The transmitter comprises a signal generator for generating a first signal in a lower frequency band of the maximum radio bandwidth of the multi-band transmitter. The first signal has a carrier located at the lower edge of the lower frequency band. The signal generator is further for generating a second signal in a higher frequency band of the maximum radio bandwidth of the multi-band transmitter. The second signal has a carrier located at the higher edge of the higher frequency band. The signal generator is further for generating a third signal in a middle frequency band of the maximum radio bandwidth of the multi-band transmitter. The middle frequency band is located asymmetrically between the lower frequency band and higher frequency band. The third signal has a carrier located at an edge of the middle frequency band. Further, the system comprises test equipment comprising a receiver for receiving the first, second and third signals. Further, the system comprises a processor for performing a transmitter test using the received first, second and third signal.

According to one embodiment, the processor for performing a transmitter test performs at least one of a base station output power test, transmitter ON/OFF power test, error vector magnitude test, time alignment error test, adjacent channel leakage power ratio test, cumulative adjacent channel leakage power ratio requirement in non-contiguous spectrum test, operating band unwanted emissions test and transmitter spurious emissions test.

According to one embodiment, the transmitter of the system is the transmitter under test. This is e.g. a transmitter of a base station. The system further comprises a termination module for terminating the transmitter output. Further, the receiver of the test equipment is for receiving the first, second and third signal emitted by a receiver output of the base station. The processor is for performing a receiver spurious emissions test of the base station. The spurious emissions of the transmitter signal, which are output at the receiver port, correspond to a significantly attenuated transmitter signal. Thus, the receiver of the system receives the first, second and third signal, which are attenuated significantly. For the testing of the receiver spurious emissions, it is advantageous to use the signal distribution as described above in order to provide a meaningful spurious emissions test.

Further advantageous features of the embodiments of the invention are defined and are described in the following detailed description.

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: Carrier spectrum for multi-band radio base station testing
- Fig. 2: Carrier spectrum for multi-band radio base station testing according to the invention
- Fig. 3: Set-up for multi-band radio base station output power, transmitter ON/OFF power, error vector magnitude, transmitter spurious emissions and operating band unwanted emission testing
- Fig. 4: Set-up for transmitter time alignment error testing
- Fig. 5: Set-up for receiver adjacent channel selectivity (ACS) and narrowband blocking characteristics testing
- Fig. 6: Set-up for receiver spurious emissions testing
- Fig. 7: Set-up for receiver intermodulation testing

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

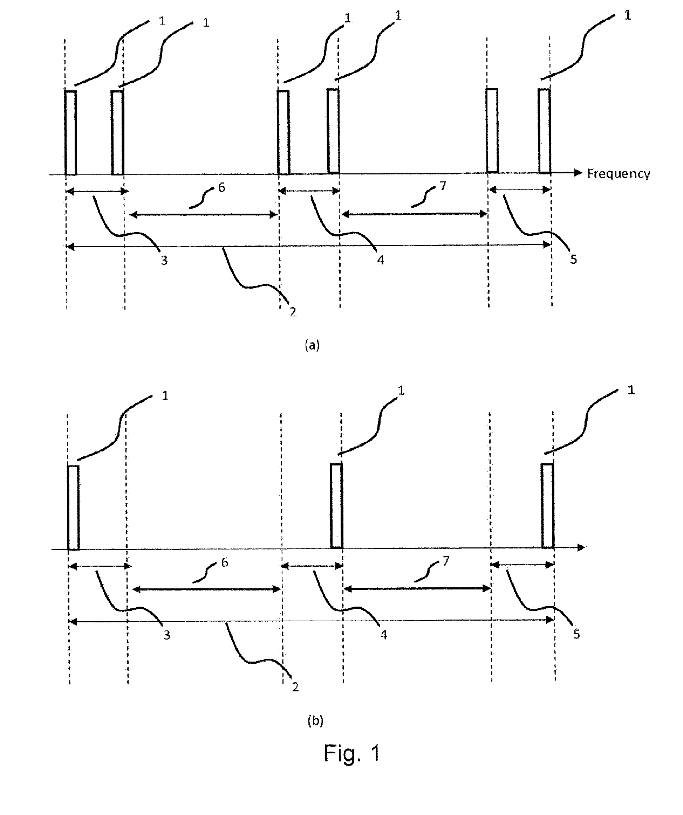

Fig. 1 shows an example of a multi-band signal used for multi-band radio base station testing as known in the art. A maximum radio bandwidth 2 of the base station is disclosed. The maximum radio bandwidth of the base station 2 is divided in multiple frequency bands 3, 4, 5 (only some of them are shown exemplarily in the figures). By way of example only, the frequency bands 3, 4, 5 have the same bandwidth. This bandwidth is equal or less to the supported frequency bandwidth for a band of the system. A lower frequency band 3 is located at the lower edge of the maximum radio bandwidth 2 of the base station. A higher frequency band 5 is located at the upper edge of the maximum radio bandwidth 2 of the base station. A middle frequency band 4 is located symmetrically between the lower frequency band 3 and the higher frequency band 5. The distance 6 between the lower frequency band 3 and the middle frequency band 4 and the distance 7 between the middle frequency band 4 and the higher frequency band 5 is equal. Thus, the test configuration is symmetric. In Fig. 1 (a), in each frequency band 3, 4, 5, two carriers 1 are used for testing. The carriers 1 are located at the edges of each frequency band 3, 4, 5. In Fig. 1 (b), only one carrier 1 is used at one edge of each frequency band 3, 4, 5. This test configuration is used if only three carriers are allowed according to the test conditions.

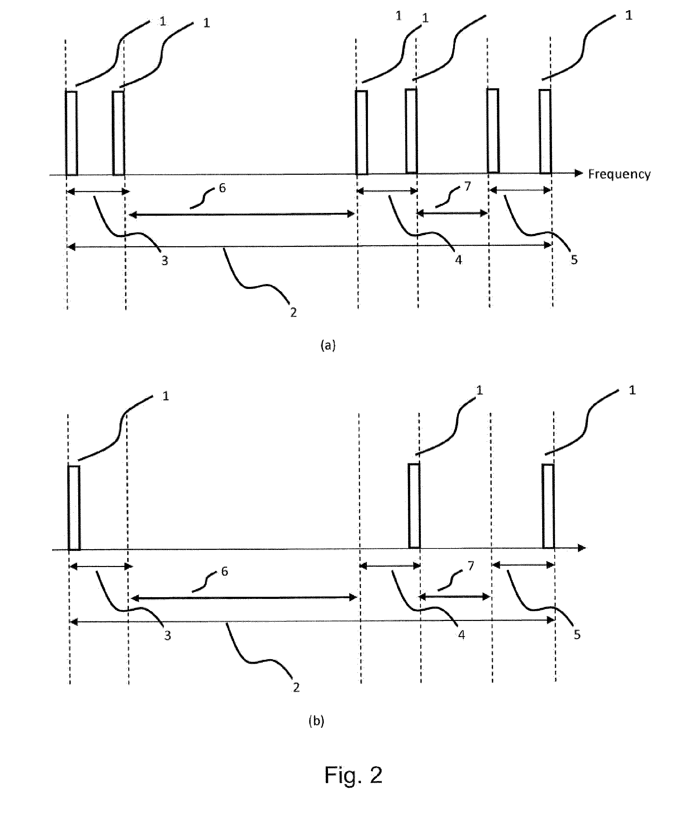

Fig. 2 discloses a multi-band test signal according to the invention. The maximum radio bandwidth 2, the lower frequency band 3 and the upper frequency band 5 correspond to the description above. Also in this figure, only some of the frequency bands are shown by way of example to illustrate the principle. The middle frequency band 4 is located asymmetrically between the lower frequency band 3 and the higher frequency band 5. Therefore, between the frequency bands used in the test configuration, the gap size is different. Between the lower frequency band 3 and the middle frequency band 4, a wide frequency gap 6 is present. Between the middle frequency band 4 and the higher frequency band 5, a narrow frequency gap 7 is present. Thus, the set up is asymmetric. In one embodiment, the wide gap 6 and the narrow gap 7 are interchanged. In one embodiment, the narrow gap 7 between the middle frequency band 4 and one high band 5 is equal to the narrowest allowed frequency band bandwidth. In Fig. 2 (a), in each frequency band 3, 4, 5, two carriers 1 are used for testing. The carriers 1 are located at the edges of each frequency band 3, 4, 5. This test configuration is used as improved test conditions corresponding to test conditions of, e.g. 3 GPP TS 36.141 - ETC5. In Fig. 2 (b), only one carrier 1 is used at one edge of each frequency band 3, 4, 5. This test configuration is used if only three carriers in three bands are allowed according to test conditions. These test conditions are used as improved test conditions corresponding to test conditions of, eg. 3 GPP TS 36.141 - ETC4.

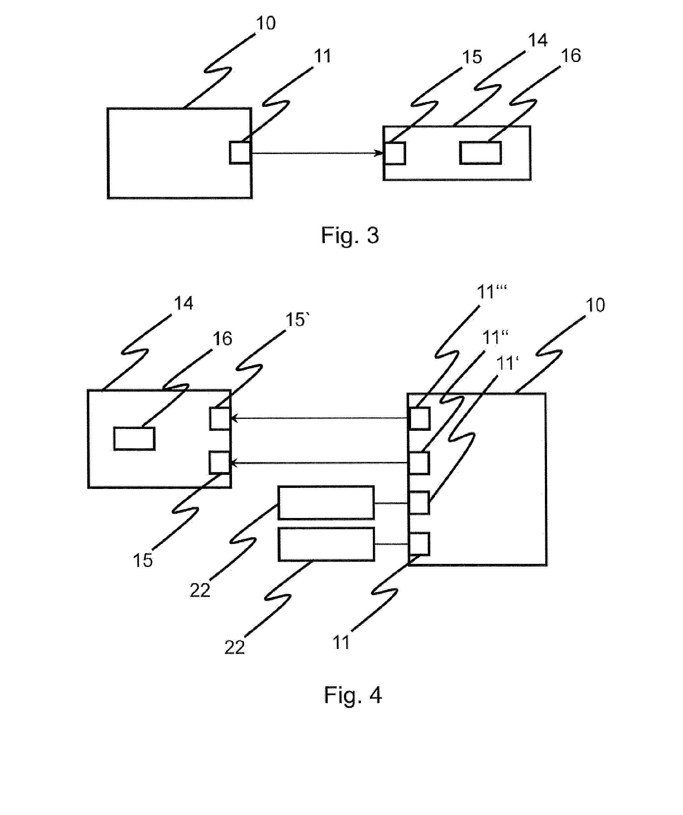

Fig. 3 depicts a measurement set-up for multi-band radio base station output power, transmitter ON/OFF power, error vector magnitude, transmitter spurious emissions and operating band unwanted emission testing. The base station 10 under test comprises a multi-band transmitter 11. The multi-band transmitter 11 is for generating at least a first signal in a lower frequency band 3 of the maximum radio bandwidth 2 of the multi-band transmitter 11. The first signal has a carrier 1 located at the lower edge of the lower frequency band 3. Further, the multi-band transmitter 11 is for generating a second signal in a higher frequency band 5 of the maximum radio bandwidth 2 of the multi-band transmitter 11. The second signal has a carrier 1 located at the higher edge of the higher frequency band 5. Further, the multi-band transmitter 11 is for generating a third signal in a middle frequency band 4 of the maximum radio bandwidth 2 of the multi-band transmitter 11. The middle frequency band 4 is located asymmetrically between the lower frequency band 3 and higher frequency band 5. The third signal has a carrier 1 located at an edge of the middle frequency band 4. The transmitter 11 output is connected to a measurement equipment 14 comprising at least a receiver 15 and a testing unit 16 for performing a transmitter test. The testing unit 16 performs at least one of an output power, transmitter ON/OFF power, error vector magnitude, transmitter spurious emissions and operating band unwanted emission test using the data received by the receiver 15.

Fig. 4 depicts a measurement set-up for time alignment error testing. The base station 10 under test comprises four multi-band transmitters 11, 11', 11'', 11'''. The multi-band transmitters 11, 11', 11'', 11''' are each for generating at least a first signal in a lower frequency band 3 of the maximum radio bandwidth 2 of the multi-band transmitters 11, 11', 11", 11'''. The first signal has a carrier 1 located at the lower edge of the lower frequency band 3. Further, the multi-band transmitters 11, 11', 11'', 11''' are each for generating a second signal in a higher frequency band 5 of the maximum radio bandwidth 2 of the multi-band transmitters 11, 11', 11'', 11'''. The second signal has a carrier 1 located at the higher edge of the higher frequency band 5. Further, the multi-band transmitters 11, 11', 11", 11"' are each for generating a third signal in a middle frequency band 4 of the maximum radio bandwidth 2 of the multi-band transmitters 11, 11', 11'', 11'''. The middle frequency band 4 is located asymmetrically between the lower frequency band 3 and higher frequency band 5. The third signal has a carrier 1 located at an edge of the middle frequency band 4. The outputs of two multi-band transmitters 11, 11' are terminated by termination modules 22. The outputs of the other two multi-band transmitters 11'', 11"' are connected to respective receivers 15, 15' of a measurement unit 14. The measurement unit 14 comprises a testing unit 16 for performing a time alignment error test.

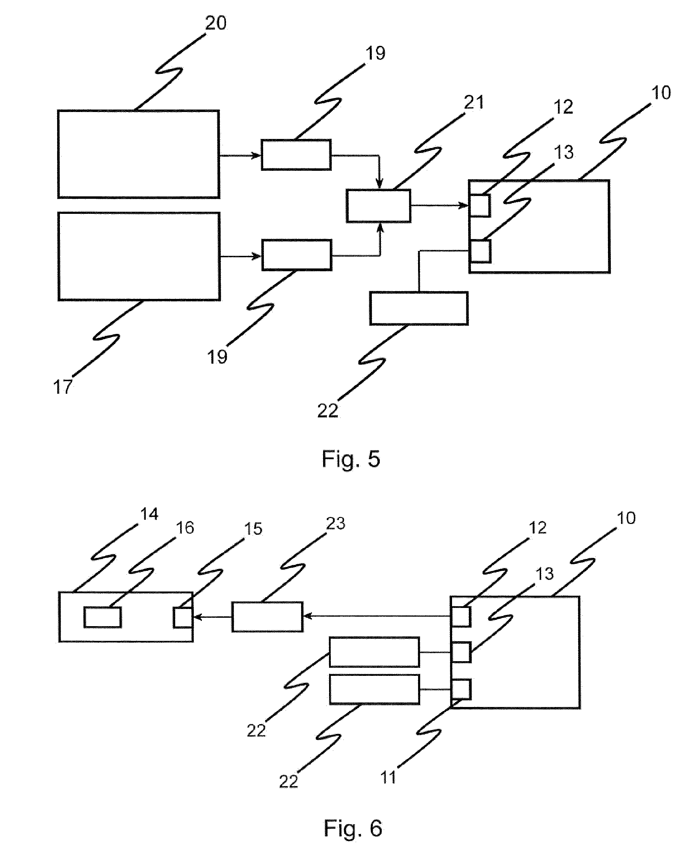

Fig. 5 depicts a measurement set-up for receiver adjacent channel selectivity (ACS) and narrowband blocking characteristics testing. The base station 10 under test includes at least one receiver 12 to be tested. The receiver 12 is for receiving at least a first signal in a lower frequency band 3 of the maximum radio bandwidth 2. The first signal has a carrier 1 located at the lower edge of the lower frequency band 3. Further, the receiver 12 is for receiving a second signal in a higher frequency band 5 of the maximum radio bandwidth 2. The second signal has a carrier 1 located at the higher edge of the higher frequency band 5. Further, the receiver 12 is for receiving a third signal in a middle frequency band 4 of the maximum radio bandwidth 2. The middle frequency band 4 is located asymmetrically between the lower frequency band 3 and higher frequency band 5. The third signal has a carrier 1 located at an edge of the middle frequency band 4. Further receivers 13 of the base station 10 are connected to a termination module 22 so that they do not influence the measurement. The output signal of a signal generator 20 generating a wanted signal, which simulates a signal as described above to be received by the receiver and the output signal of a signal generator 17 for an interfering signal, which simulates disturbing signals in the band and out of band, are connected by attenuators 19 to a hybrid 21. The output signal of the hybrid 21 composed of the output signals of both signal generators 17, 20 is connected to the receiver 12 under test. In case blocking characteristics test is made for a RX/TX module, a circulator is included in the path between the RX/TX module under test and the hybrid 21, and one output of the circulator is connected to a termination module.

Fig. 6 depicts a measurement set-up for receiver spurious emissions testing. The base station 10 under test comprises a multi-band transmitter 11. The multi-band transmitter 11 is for generating at least a first signal in a lower frequency band 3 of the maximum radio bandwidth 2 of the multi-band transmitter 11. The first signal has a carrier 1 located at the lower edge of the lower frequency band 3. Further, the multi-band transmitter 11 is for generating a second signal in a higher frequency band 5 of the maximum radio bandwidth 2 of the multi-band transmitter 11. The second signal has a carrier 1 located at the higher edge of the higher frequency band 5. Further, the multi-band transmitter 11 is for generating a third signal in a middle frequency band 4 of the maximum radio bandwidth 2 of the multi-band transmitter 11. The middle frequency band 4 is located asymmetrically between the lower frequency band 3 and higher frequency band 5. The third signal has a carrier 1 located at an edge of the middle frequency band 4. The multi-band transmitter output is connected to a termination module 22. Further, the base station 10 comprises a receiver 12, which is connected to a notch filter 23 for passing only the frequency band of the transmitter 11. The base station comprises further receivers 13 which are connected to a termination module 22 in order that they do not influence the measurement. The output of the notch filter 23 is connected to a measurement unit 14 comprising a receiver 15 and a testing unit 16 for performing a spurious emissions test.

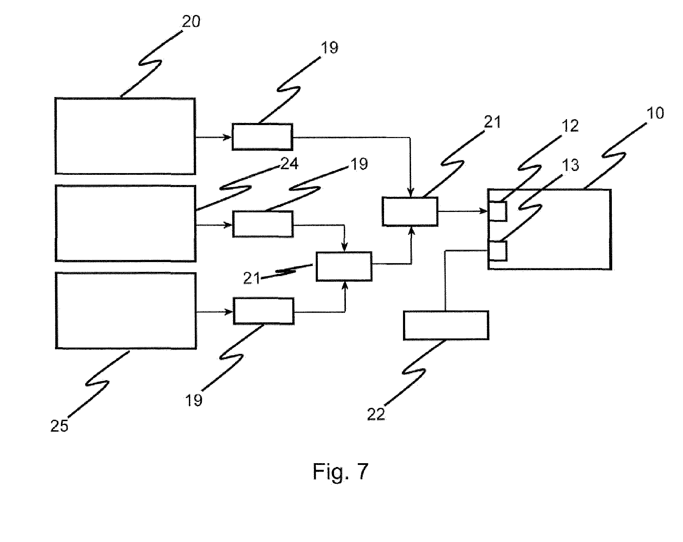

Fig. 7 depicts a measurement set-up for receiver intermodulation testing. The base station 10 under test includes at least one receiver 12 to be tested. The receiver 12 is for receiving at least a first signal in a lower frequency band 3 of the maximum radio bandwidth 2. The first signal has a carrier 1 located at the lower edge of the lower frequency band 3. Further, the receiver 12 is for receiving a second signal in a higher frequency band 5 of the maximum radio bandwidth 2. The second signal has a carrier 1 located at the higher edge of the higher frequency band 5. Further, the receiver 12 is for receiving a third signal in a middle frequency band 4 of the maximum radio bandwidth 2. The middle frequency band 4 is located asymmetrically between the lower frequency band 3 and higher frequency band 5. The third signal has a carrier 1 located at an edge of the middle frequency band 4. Further receivers 13 of the base station 10 are connected to a termination module 22 so that they do not influence the measurement. The output signal of a signal generator 20 for a wanted signal simulating a signal as described above to be received by the receiver is attenuated by an attenuator 19. The attenuated signal and a disturbing signal are connected to a hybrid 21. The output signal of the hybrid 21 is connected to the receiver 12 under test. For generating the disturbing signal, a signal generator 24 for a continuous wave (CW) interfering signal and a signal generator 25 for a modulated interfering signal are connected via attenuators 19 to a hybrid 21. The output of the hybrid 21 is the disturbing signal.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for testing a multi-band transmitter (11), comprising the steps:
- receiving a first signal in a lower frequency band (3) of the maximum radio bandwidth (2) of the multi-band transmitter (11), the first signal having a carrier (1) located at the lower edge of the lower frequency band (3);
- receiving a second signal in a higher frequency band (5) of the maximum radio bandwidth (2) of the multi-band transmitter (11), the second signal having a carrier (1) located at the higher edge of the higher frequency band (5);
- receiving a third signal in a middle frequency band (4) of the maximum radio bandwidth (2) of the multi-band transmitter (11), the middle frequency band (4) being asymmetrically located between the lower frequency band (3) and higher frequency band (4), the third signal having a carrier (1) located at an edge of the middle frequency band (4);
- performing a multi-band transmitter test using the received first, second and third signal.

2. Method for testing a multi-band transmitter according to claim 1, wherein the third signal has a carrier located at the higher edge of the middle frequency band.

3. Method for testing a multi-band transmitter according to claim 1, wherein the third signal has a carrier located at the lower edge of the middle frequency band.

4. Method for testing a transmitter according to one of claims 1 to 3, wherein the transmitter is a transmitter of a multi-band base station.

5. Method for testing a multi-band transmitter according to one of claims 1 to 4, wherein the first, the second and the third received signals each consisting of two or more carriers having defined frequency distances from each other within the frequency bands.

6. Method for testing a transmitter according to claim 1 or 5, wherein the performed transmitter test is at least one of a base station output power test, transmitter ON/OFF power test, error vector magnitude test, time alignment error test, adjacent channel leakage power ratio test, cumulative adjacent channel leakage power ratio requirement in non-contiguous spectrum test, operating band unwanted emissions test and transmitter spurious emissions test.

7. Method for testing a transmitter according to claim 4 or 5, wherein the transmitter generates the first signal, the second signal and the third signal, and the signals are emitted by at least one receiver port of a base station (10) when the transmitter ports are terminated, and receiver spurious emissions are measured by the transmitter test.

8. Method for testing a multi-band receiver (12), comprising the steps of:
- receiving a first signal in a lower frequency band (3) of the maximum radio bandwidth (2) of the multi-band receiver (12), the first signal having a carrier (1) located at the lower edge of the lower frequency band (3), the first signal being overlaid by an interfering signal;
- receiving a second signal in a higher frequency band (5) of the maximum radio bandwidth (2) of the multi-band receiver (12), the second signal having a carrier (1) located at the higher edge of the higher frequency band (5), the second signal being overlaid by an interfering signal;
- receiving a third signal in a middle frequency band (4) of the maximum radio bandwidth (2) of the multi-band receiver (12), the middle frequency band (4) being asymmetrically located between the lower frequency band (3) and the higher frequency band (5), the third signal having a carrier (1) located at an edge of the middle frequency band (4), the third signal being overlaid by an interfering signal;
- performing a multi-band receiver test using the received first, second and third signal.

9. Method for testing a multi-band receiver according to claim 8, wherein the performed receiver test is at least one of a adjacent channel selectivity and narrowband blocking test, a blocking characteristics test and a receiver intermodulation test.

10. Method for testing a multi-band receiver according to one of claims 8 and 9, wherein the interfering signal is composed of a combination of a CW interfering signal and a modulated interfering signal.

11. Apparatus for generating a multi-band receiver testing signal, comprising:
- a first signal generator (20) for generating a first signal in a lower frequency band (3) of the maximum radio bandwidth (2) of the multi-band receiver (12), the first signal having a carrier (1) located at the lower edge of the lower frequency band (3); and for generating a second signal in a higher frequency band (5) of the maximum radio bandwidth (2) of the multi-band receiver (12), the second signal having a carrier (1) located at the higher edge of the higher frequency band (5); and for generating a third signal in a middle frequency band (4) of the maximum radio bandwidth (2) of the multi-band receiver (12), the middle frequency band (4) being asymmetrically located between the lower frequency band (3) and the higher frequency band (5), the third signal having a carrier (1) located at an edge of the middle frequency band (4); and ,
- a second signal generator (17) for generating an interfering signal,
- a first coupler (21) for coupling the signals of the first signal generator (20) and the second signal generator (17).

12. Apparatus for generating a multi-band receiver testing signal according to claim 11, wherein the second signal generator (17) for generating an interfering signal comprises:
- a third signal generator (24) for generating a CW interfering signal and a fourth signal generator (25) for generating a modulated interfering signal, and
- a second coupler (21) for coupling the signals of the third signal generator (24) and the fourth signal generator (25).

13. System for performing a multi-band transmitter test, comprising:
- a transmitter (11) including a signal generator for generating a first signal in a lower frequency band (3) of the maximum radio bandwidth (2) of the multi-band transmitter (11), the first signal having a carrier (1) located at the lower edge of the lower frequency band (3); and for generating a second signal in a higher frequency band (5) of the maximum radio bandwidth (2) of the multi-band transmitter (11), the second signal having a carrier (1) located at the higher edge of the higher frequency band (5); and for generating a third signal in a middle frequency band (4) of the maximum radio bandwidth (2) of the multi-band transmitter, the middle frequency band (4) being asymmetrically located between the lower frequency band (3) and higher frequency band (5), the third signal having a carrier (1) located at an edge of the middle frequency band (4), and
- a test equipment (14) comprising a receiver (15) for receiving the first, second and third signals, and
- a processor (16) for performing a transmitter test using the received first, second and third signal.

14. System according to claim 13, wherein the processor (16) for performing a transmitter test tests at least one of a base station output power test, transmitter ON/OFF power test, error vector magnitude test, time alignment error test, adjacent channel leakage power ratio test, cumulative adjacent channel leakage power ratio requirement in non-contiguous spectrum test, operating band unwanted emissions test and transmitter spurious emissions test.

15. System according to claim 13, wherein the transmitter (11) is a transmitter (11) of a base station (10) and wherein the system further includes a termination module (22) for terminating the transmitter output and wherein the receiver (15) of the test equipment (14) is for receiving the first, second and third signal emitted by a receiver output of the base station (10) and the processor (16) is for performing a receiver spurious emissions test of the base station (10).
